# EUROPEAN PATENT APPLICATION

(11) **EP 4 383 162 A1**
(43) Date of publication of application: **12.06.2024**
(21) Application number: 23156026.9
(22) Date of filing: 10.02.2023
(51) Int. Cl.: G06Q 10/067, G06Q 40/00

(54) **METHOD AND SYSTEM FOR DEVELOPING AND MANAGING A PRODUCT**

(30) Priority: 06.12.2022 IN 202241070353
(71) Applicant: Infosys Limited, 560-100 Bangalore (IN)
(72) Inventor: SHANBHAG, Ramanath Narayan, 560100 Bangalore (IN)
(74) Representative: Savi, Massimiliano

(57) **Abstract**

This disclosure relates to method and system for developing and managing a product. The method includes creating a product template including a plurality of data elements. The plurality of data elements is indicative of configurable items. The method further includes configuring one or more of the plurality of data elements in the product template to generate a product model. The method further includes configuring the product model using one or more of a plurality of rules, based on an industry specific domain knowledge, to obtain at least one product and to generate a set of instructions for the at least one product. The method further includes receiving one or more queries from a user device, corresponding to the at least one product. The method further includes processing the set of instructions in response to each of the one or more queries to create a set of executable actions.

## Description

### CROSS-REFERENCE TO RELATED APPLICATION

This application claims priority to Indian Patent Application No. 202241070353, filed on December 6, 2022, which is hereby incorporated by reference in its entirety.

### TECHNICAL FIELD

This disclosure relates generally to business platforms, and more particularly to method and system for developing and managing a product.

### BACKGROUND

In the current global marketplace, companies are required to constantly develop innovative products in order to stay competitive. However, such companies face many challenges in developing new products. In the present state of art, business systems (such as, insurance policy admin systems, core banking, wealth management systems, or mortgage systems) do not have a way for enabling business users to dynamically model products. Developing such products requires deep Information Technology (IT) intervention and coding. Moreover, developing such products does not allow the business any visibility into the process. These systems also do not provide insights into what would happen in case a certain behavior or business rule is changed on the product.

Further, dynamically managing the product involves responding to customer queries and simulation of various "what-if" scenarios with respect to the product. Different industries may require different strategies in order to understand context of the customer queries and respond accordingly. These challenges further hinder attempts at automation and pose many challenges for businesses. The conventional techniques fail to provide for standardized, industry-specific product development in a user-friendly manner. There is, therefore, a need in the present state of art for techniques to dynamically configure and manage a product.

### SUMMARY

In one embodiment, a method for developing and managing a product is disclosed. In one example, the method may include creating a product template including a plurality of data elements. The plurality of data elements may be indicative of configurable items. The method may further include configuring one or more of the plurality of data elements in the product template to generate a product model. The method may further include configuring the product model using one or more of a plurality of rules, based on an industry specific domain knowledge, to obtain at least one product and to generate a set of instructions for the at least one product. The method may further include receiving one or more queries from a user device corresponding to the at least one product. The method may further include processing the set of instructions in response to each of the one or more queries to create a set of executable actions. Each of the set of executable actions may include a predefined execution criterion.

In one embodiment, a system for developing and managing a product is disclosed. In one example, the system may include a processor and a computer-readable medium communicatively coupled to the processor. The computer-readable medium store processor-executable instructions, which, on execution, may cause the processor to create a product template including a plurality of data elements. The plurality of data elements may be indicative of configurable items. The processor-executable instructions, on execution, may further cause the processor to configure one or more of the plurality of data elements in the product template to generate a product model. The processor-executable instructions, on execution, may further cause the processor to configure the product model using one or more of a plurality of rules, based on an industry specific domain knowledge, to obtain at least one product and to generate a set of instructions for the at least one product. The processor-executable instructions, on execution, may further cause the processor to receive one or more queries from a user device corresponding to the at least one product. The processor-executable instructions, on execution, may further cause the processor to process the set of instructions in response to each of the one or more queries to create a set of executable actions. Each of the set of executable actions may include a predefined execution criterion.

In one embodiment, a non-transitory computer-readable medium storing computer-executable instructions for developing and managing a product is disclosed. In one example, the stored instructions, when executed by a processor, cause the processor to perform operations including creating a product template including a plurality of data elements. The plurality of data elements may be indicative of configurable items. The operations may further include configuring one or more of the plurality of data elements in the product template to generate a product model. The operations may further include configuring the product model using one or more of a plurality of rules, based on an industry specific domain knowledge, to obtain at least one product and to generate a set of instructions for the at least one product. The operations may further include receiving one or more queries from a user device corresponding to the at least one product. The operations may further include processing the set of instructions in response to each of the one or more queries to create a set of executable actions. Each of the set of executable actions may include a predefined execution criterion.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a block diagram of an exemplary system for developing and managing a product, in accordance with some embodiments of the present disclosure;
FIG. 2 illustrates a functional block diagram of an exemplary system for developing and managing a product, in accordance with some embodiments of the present disclosure;
FIG. 3 illustrates a detailed functional block diagram of an exemplary system for developing and managing a product, in accordance with some embodiments of the present disclosure;
FIG. 4 illustrates generation of a set of instructions through a product service, in accordance with some embodiments of the present disclosure;
FIG. 5 illustrates a flow diagram of an exemplary process for developing and managing a product, in accordance with some embodiments of the present disclosure;
FIGs. 6A, 6B, and 6C illustrate an exemplary model of a set of instructions, in accordance with some embodiments of the present disclosure;
FIG. 7 is a block diagram of an exemplary computer system for implementing embodiments consistent with the present disclosure of the present disclosure;

### DETAILED DESCRIPTION OF THE EMBODIMENTS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

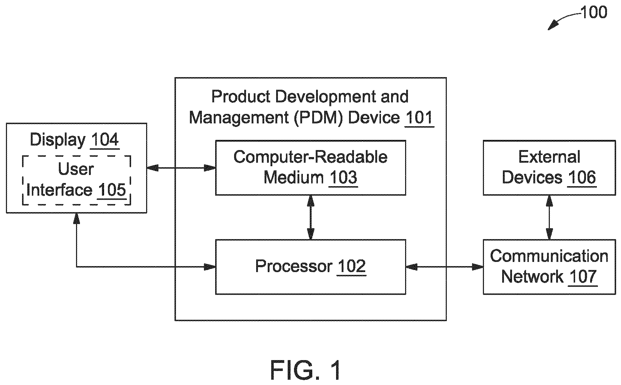

Referring now to FIG. 1, an exemplary system 100 for developing and managing a product is illustrated, in accordance with some embodiments of the present disclosure. The system 100 may implement a Product Development and Management (PDM) device 101 (for example, server, desktop, laptop, notebook, netbook, tablet, smartphone, mobile phone, or any other computing device), in accordance with some embodiments of the present disclosure. The PDM device 101 may develop a product through a product template including a plurality of data elements.

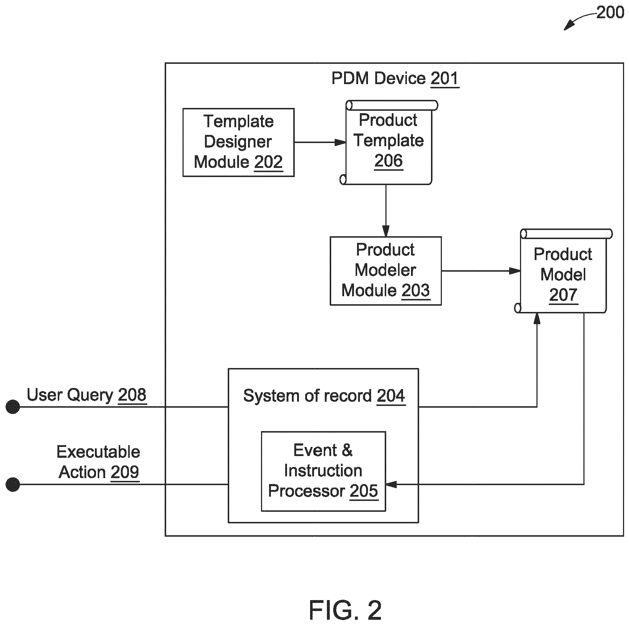

As will be described in greater detail in conjunction with FIGS. 2-6, the PDM device 101 may create a product template including a plurality of data elements. The plurality of data elements may be indicative of configurable items. Further, the PDM device 101 may configure one or more of the plurality of data elements in the product template to generate a product model. Further, the PDM device 101 may configure the product model using one or more of a plurality of rules, based on an industry specific domain knowledge, to obtain at least one product and to generate a set of instructions for the at least one product. Further, the PDM device 101 may receive one or more queries from a user device corresponding to the at least one product. Further, the PDM device 101 may process the set of instructions in response to each of the one or more queries to create a set of executable actions. Each of the set of executable actions may include a predefined execution criterion.

In some embodiments, the PDM device 101 may include one or more processors 102 and a computer-readable storage medium 103 (for example, a memory). Further, the computer-readable storage medium 103 may store instructions that, when executed by the one or more processors 102, cause the one or more processors 102 to develop and manage a product, in accordance with aspects of the present disclosure. The computer-readable storage medium 103 may also store various data (for example, product template data, plurality of data elements for each product template, product model data, plurality of strategies, set of instructions, and the like) that may be captured, processed, and/or required by the system 100.

The system 100 may further include a display 104. The system 100 may interact with a user via a user interface 105 accessible via the display 104. The system 100 may also include one or more external devices 106. In some embodiments, the PDM device 101 may interact with the one or more external devices 106 over a communication network 107 for sending or receiving various data. The external devices 106 may include, but may not be limited to, a remote server, a digital device, or another computing system.

Referring now to FIG. 2, functional block diagram of an exemplary system 200 for developing and managing a product is illustrated, in accordance with some embodiments of the present disclosure. The system 200 may include a PDM device 201. In an embodiment, the system 200 and the associated PDM device 201 may be analogous to the system 100 and the associated PDM device 101, respectively. The PDM device 201 may include a template designer module 202, a product modeler module 203, and a system of record 204. The system of record 204 may further include an event and instruction processor 205.

The template designer module 202 may generate a product template 206 that may include a plurality of data elements. The product template 206 may be designed by a business user (e.g., business owner, business executive, product designer, etc.) associated with a product-selling entity (such as, a business organization). The product template designer module 202 allows business users to design product templates specific to industry, Line of Business (LoB), or product lines (for example, insurance (life, term, etc.), mortgages (residential, reverse mortgage, etc.), lending (personal, credit, etc.), or the like).

The business user may select the plurality of data elements to create the product template 206. It may be noted that the plurality of data elements is indicative of configurable items. By way of an example, the plurality of data elements may include, but may not be limited to, a plurality of features from a feature library, a plurality of configurable feature elements, a plurality of events, and a plurality of behavior types.

The feature library may include the plurality of configurable feature elements that may be configured by the product. It may be noted that configuration element language is a unique language which defines a configurable feature element and behavior aspects. Different types of configurable feature elements such as range, list, expressions, etc. may be created and used in the feature library to define feature types. Feature types are industry specific and may be modeled as per the industry or LoB. Additionally, the plurality of events and the plurality of behavior types may be defined on the product template 206.

The product modeler module 203 may receive the product template 206 from the template designer module 202. The product modeler module 203 may generate a product model 207 by configuring one or more of the plurality of data elements in the product template 206. Further, the product modeler module 203 may configure the product model 207 using one or more of a plurality of rules, based on an industry specific domain knowledge (i.e., a product service), to obtain at least one product. Configuring the product template 206 may include selecting one or more features from the plurality of features available on the product template 206, creating a linked arrangement of one or more of the plurality of features of the product model 207, selecting one or more feature elements from the plurality of configurable feature elements and assigning a value to each of the selected one or more feature elements, assigning values to the plurality of configurable feature elements, defining variant offerings for the product model 207, defining strategies for responding to events at feature and product level, defining one or more of the plurality of events and one or more of the plurality of behavior types for the product model 207, and the like.

The product modeler module 203 may provide a capability to business users to model their product offering to be offered to a customer in an easy and seamless manner. The product modeler module 203 allows business users across industries such as, but not limited to, insurance (life, health, P&C, and other similar business lines), financial services (banking, wealth management, and other similar business lines), or any other business domains to model existing and/or new products to be launched in a highly configurable way.

The product modeler module 203 may allow the business user to model various features on the product - explicitly offered to the customer (i.e., explicit features) as well as implicitly offered (i.e., implicit features). By way of an example, the explicit features may be offered in insurance domain (e.g., coverages or riders) and finance domain (e.g., savings product, current account products, etc.). The implicit features may also be offered in insurance domain (e.g., offerings which are allowed on the product by nature of buying a certain explicit feature such as Systematic Fund Transfers, bundled riders, etc.) and finance domain (overdraft, top-up loan, etc.). Additionally, the product modeler module 203 may allow the business user to create variants of the same product, to manage the pricing of the product in a flexible manner allowing for dynamic dimensions for customized pricing strategies, to associate configurable behaviors for different events in the life cycle of association of the customer with the product starting from buying and servicing to terminating the product, and to make changes to the product post launch and launch a new version of the same product with modified pricing or modified offerings.

Pricing may be done using a combination of calculation strategies for sub-component charges, computation strategies to aggregate the sub-component charges. Calculation strategies may include, but may not be limited to, expression-based strategies, table lookup-based strategies, or the like. Pricing tables may be uploaded using business-friendly tools in file formats such as Microsoft Excel^{®} Open XML Spreadsheet (XLSX) format, Comma Separated Values (CSV) format, etc. The pricing tables may have flexible dimensions. The values of the pricing tables may include expressions based on custom business specific vocabulary functions, thereby giving complete flexibility to business users to manage their pricing independently with minimal or no IT intervention.

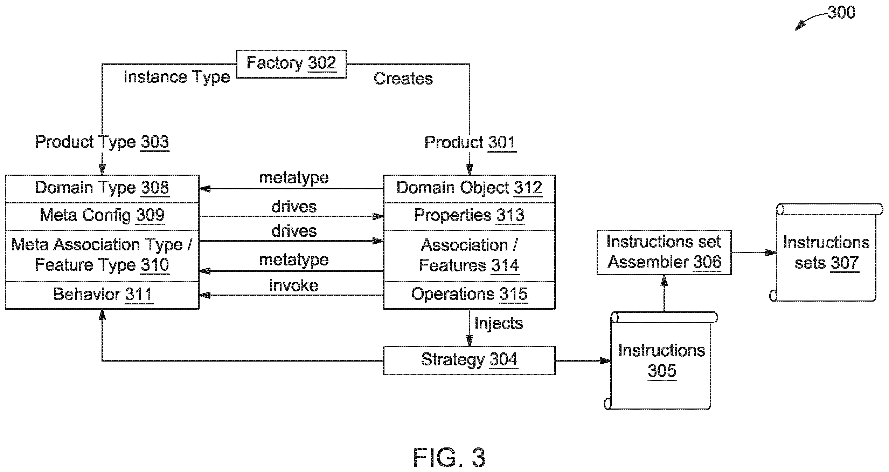

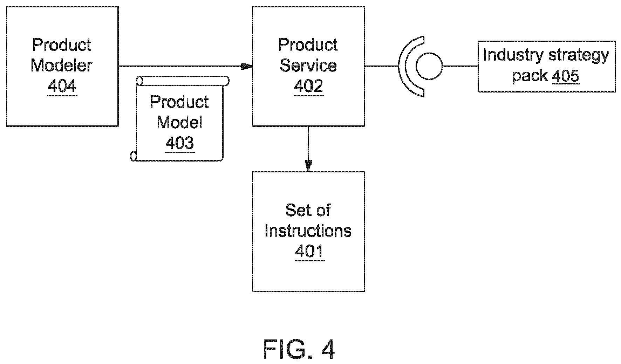

Further, the product model 207 may be used by the industry-specific domain knowledge to generate a set of instructions for the at least one product, when queried for a specific event and context. This is further explained in conjunction with FIGs. 3 and 4. It should be noted that product models specific to an industry may extend a base product model to provide industry specific operations.

The product modeler module 203 is a digital brain that may influence behaviors of the system of record 204 thereby allowing for centralized control and visibility, allowing for different scenario analysis prior to launch of the product or allowing for systematic analysis at an individual purchased unit level (e.g., customer policy, customer savings account, home mortgage account etc.).

In an inquiry mode of operation of the system 200, the event and instruction processor 205 may receive a user query 208 from the customer. Further, the event and instruction processor 205 may send the user query 208 corresponding to a product to the product modeler module 203. In an execution mode, the event and instruction processor 205 may then receive the set of instructions corresponding to the product based on the product model 207 from the product modeler module 203 using the product service for a specific event and context. It may be noted that the product may use the configured product model 207 to execute strategies to generate the set of instructions. The set of instructions, when sent to the event and instruction set processor 205 may invoke instruction handlers to create a set of executable actions (such as, an executable action 209) on the system of record 204 or on downstream systems in a distributed micro-systems architecture. The event and instruction set processor 205 metamodel allows for time based or user action based execution (e.g., immediate, future-dated, discretionary approval-based actions, or the like) depending on the instruction directive. Meta model may also factor for order of execution of different instructions.

Alternately, upon receiving the user query 208, the event and instruction processor 205 may simulate the set of executable actions to obtain a response corresponding to each of the one or more queries without executing the executable action 209. This may allow the customer to simulate various "what if" scenarios (for example, what will happen if the customer withdraws the amount prior to completion of maturity time period). In such scenarios, it may be preferable for the customer to know the outcome before agreeing to execute the executable action 209.

Using the set of instructions in response to user queries, the event and instruction processor 205 may respond to the user query 208 in a flexible and evolvable manner. As a result, the system of record 204 may respond rapidly to changing requirements. The event and instruction processor 205 may accept the set of instructions generated by the product modeler module 203 and the product service and may then invoke a sequence of handlers which can handle specific instructions in a standardized manner. For example, an instruction to modify the premium to be paid may be triggered in multiple event scenarios such as, when the customer wants to change the coverage sum assured or when the risk profile of the person changes due to change in occupation or other risk sensitive events. In both the aforementioned scenarios, even though the requested change from the customer is different, the activities needed to apply the effect on the system of record 204 is the same. By generalizing the set of instructions and having specific handlers, the system of record 204 may manage the implication of the change in a better way with minimal changes needed to the core system of record 204.

It should be noted that all such aforementioned modules 202 - 205 may be represented as a single module or a combination of different modules. Further, as will be appreciated by those skilled in the art, each of the modules 202 - 205 may reside, in whole or in parts, on one device or multiple devices in communication with each other. In some embodiments, each of the modules 202 - 205 may be implemented as dedicated hardware circuit comprising custom application-specific integrated circuit (ASIC) or gate arrays, off-the-shelf semiconductors such as logic chips, transistors, or other discrete components. Each of the modules 202 - 205 may also be implemented in a programmable hardware device such as a field programmable gate array (FPGA), programmable array logic, programmable logic device, and so forth. Alternatively, each of the modules 202 - 205 may be implemented in software for execution by various types of processors (e.g., processor 102). An identified module of executable code may, for instance, include one or more physical or logical blocks of computer instructions, which may, for instance, be organized as an object, procedure, function, or other construct. Nevertheless, the executables of an identified module or component need not be physically located together, but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for developing and managing a product. For example, the exemplary system 100 and the associated PDM device 101 may develop and manage a product by the processes discussed herein. In particular, as will be appreciated by those of ordinary skill in the art, control logic and/or automated routines for performing the techniques and steps described herein may be implemented by the system 100 and the PDM device 101 either by hardware, software, or combinations of hardware and software. For example, suitable code may be accessed and executed by the one or more processors on the system 100 to perform some or all of the techniques described herein. Similarly, application specific integrated circuits (ASICs) configured to perform some or all of the processes described herein may be included in the one or more processors on the system 100.

Referring now to FIG. 3, a detailed functional block diagram of an exemplary system 300 for developing and managing a product, in accordance with some embodiments of the present disclosure. The system 300 may include a factory 302. It may be noted that the factory 302 may be analogous to the product modeler module 203 of the PDM device 201. It may also be noted that the system 300 is depicted through an object model representation. Individual industry product models may extend a base product model to provide industry specific operations. Further, the system 300 may include a product type 303 (i.e., an instance of the product 301), the product 301, strategy 304, instructions 305, an instruction set assembler 306, and instruction sets 307.

The factory 302 may provide an instance type (i.e., the product type 303). The product 301 may be generated based on the product type 303. In an embodiment, the product type 303 may include a domain type 308, meta config 309, meta association type/feature type 310, and behavior 311. The corresponding product 301 may include a domain object 312, properties 313, association/features 314, and operations 315. The domain object 312 may be a metatype of the domain type 310. The meta config 309 may drive the properties 313. The meta association type may drive the association and in turn, the feature type may be a metatype of the features. Additionally, the operations 315 may be invoked based on the behavior 311.

The product service may register various industry packs to avail the plurality of rules (i.e., strategies), such as, the strategy 304, for configuration of the product. As a result, regional variations (for example, to provide product line templates for US-specific Term insurance or India-specific Term insurance products) can be accommodated at template as well as strategy level using the plurality of rules.

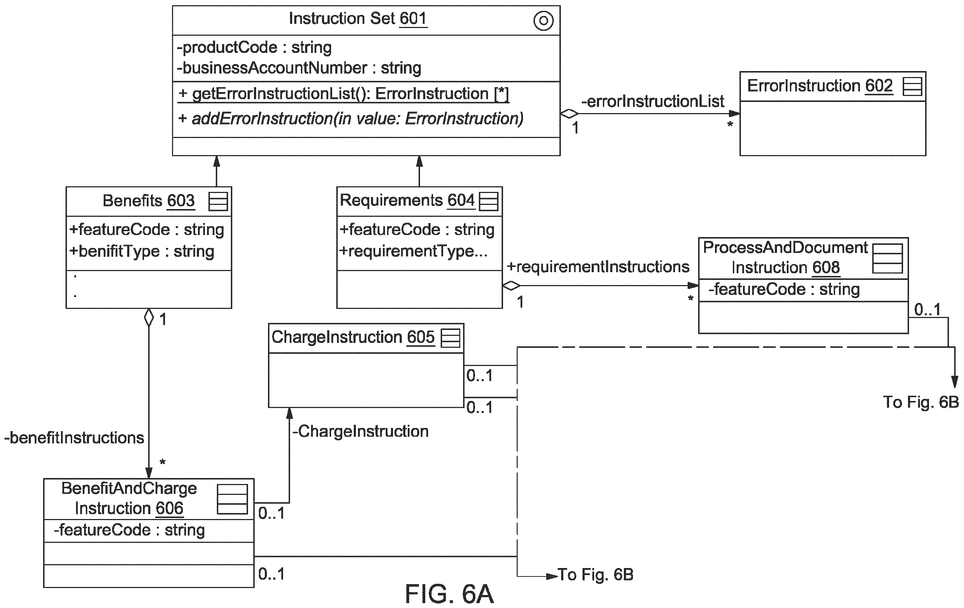

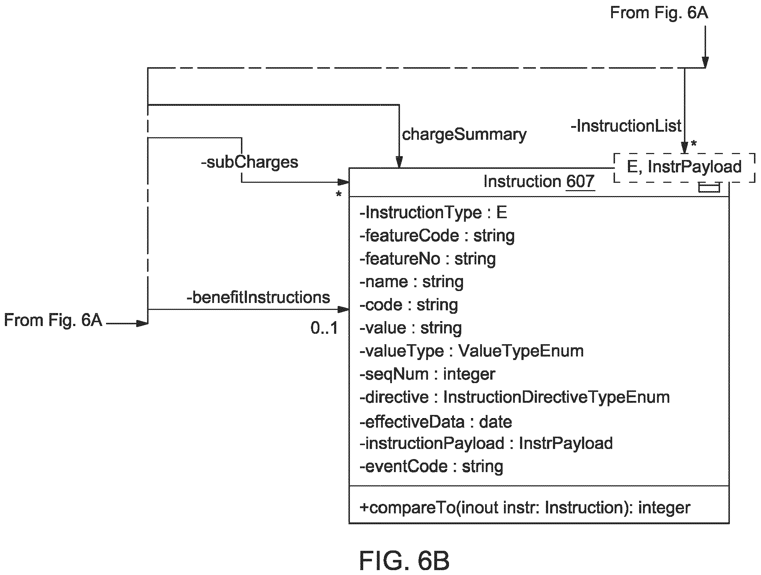

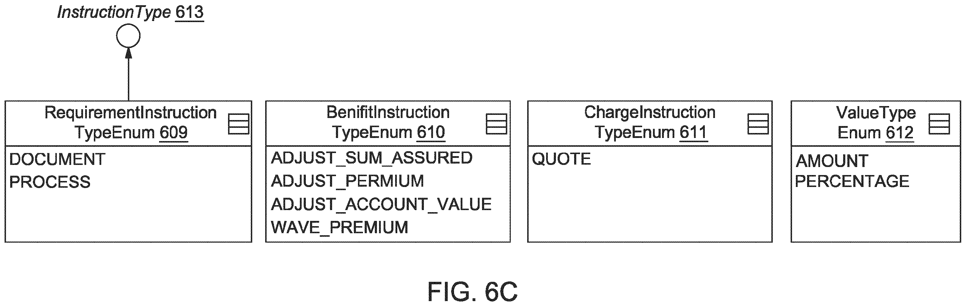

Based on the product and the strategy, the instructions 305 may be generated. Further, the instructions 305 may be sent to the instruction set assembler 306 to generate the instruction sets 307. The instruction set model at a base level may include generic instructions which have certain characteristics. This is further explained in detail in conjunction with the FIGs. 4 and 6.

Referring now to FIG. 4, generation of a set of instructions 401 through a product service 402 is illustrated, in accordance with some embodiments of the present disclosure. In an embodiment, the product service 402 may receive a product model 403 from a product modeler 404 (analogous to the product modeler module 203 of the system 200). Further, to generate the set of instructions 401, the product service 402 may use a strategy from an industry strategy pack 405 based on business and product requirements. For example, an insurance business looking to launch a life insurance product line may use a life insurance-specific strategy to launch the set of instructions 401 corresponding to the life insurance product line.

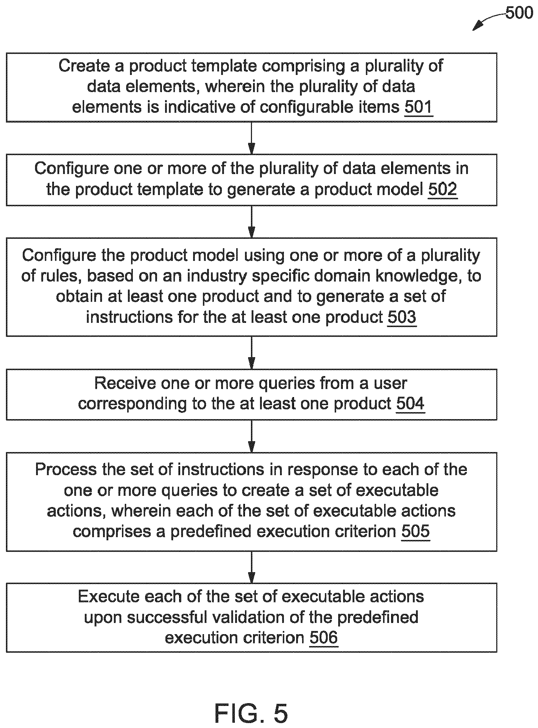

Referring now to FIG. 5, an exemplary process 500 for developing and managing a product is depicted via a flowchart, in accordance with some embodiments of the present disclosure. In an embodiment, the process 500 may be implemented by the PDM device 101 of the system 100. The process 500 may include creating, by the template designer module 202, a product template including a plurality of data elements, at step 501. It may be noted that the plurality of data elements is indicative of configurable items. By way of an example, the plurality of data elements may include a plurality of features from a feature library, a plurality of configurable feature elements, a plurality of events, and a plurality of behavior types.

Further, the process 500 may include configuring, by the product modeler module 203, one or more of the plurality of data elements in the product template to generate a product model, at step 502. In some embodiments, the step 502 of the process 500 may include selecting one or more of the plurality of features from the product template. In some embodiments, the step 502 of the process 500 may include creating a linked arrangement of one or more of the plurality of features of the product model. The linked arrangement may include a set of primary features and a set of secondary features in form of bundles. The set of secondary features may be linked with the set of primary features. In an embodiment, the linked arrangement may be a hierarchical arrangement where primary features are hierarchically linked with secondary features. By way of an example, the linked arrangement may link two features in a parent-child mode (where one feature is a parent feature and other feature is a child feature) or in a sibling mode (where two features are linked at the same level). In case of bundles with features linked in a parent-child mode, a user (i.e., a customer) opting to buy a child feature may mandatorily be required to purchase the parent feature. In other words, the customer can buy a child feature only if the parent feature is bought. For example, an accidental benefit rider cannot be bought without buying the base coverage linked to it.

In some embodiments, the step 502 of the process 500 may include creating a variant feature corresponding to each of one or more of the plurality of features in the product model. In some embodiments, the step 502 of the process 500 may include selecting one or more feature elements from the plurality of configurable feature elements and assigning a value to each of the selected one or more feature elements. In some embodiments, the step 502 of the process 500 may include defining at least one product offering for the product model. Each of the at least one product offering corresponds to a product. In some embodiments, the step 502 of the process 500 may include defining one or more of the plurality of events and one or more of the plurality of behavior types for the product model. It may be noted that in a preferred embodiment, the step 502 of the process 500 may include at least one of the above mentioned sub-steps.

Further, the process 500 may include configuring, by the product modeler module 203 and a product service (such as, the product service 402), the product model using one or more of a plurality of rules, based on an industry specific domain knowledge, to obtain at least one product and to generate a set of instructions for the at least one product, at step 503. The step 503 of the process 500 may include determining a response to one or more of the plurality of behavior types in the product model in accordance with the one or more of the plurality of rules. Further, the step 503 of the process 500 may include determining a response to one or more of the plurality of events in the product model based on the one or more of the plurality of behavior types (for example, charges, benefits, requirements, etc.) in accordance with the one or more of the plurality of rules.

Further, the process 500 may include receiving, by the event and instruction processor 205, one or more queries from a user device corresponding to the at least one product, at step 504. Further, the process 500 may include processing, by the event and instruction processor 205, the set of instructions in response to each of the one or more queries to create a set of executable actions, at step 505. Each of the set of executable actions may include a predefined execution criterion. By way of an example, the set of executable actions may include at least one of user action-based executable actions and time-based executable actions. The predefined execution criterion for each of the user action-based executable actions is receipt of a user command for execution and the predefined execution criterion for each of the time-based executable actions is expiration of a predefined time interval.

Further, the process 500 may include executing, by the event and instruction processor 205, each of the set of executable actions upon successful validation of the predefined execution criterion, at step 506. In an embodiment, upon receiving the one or more queries, the process 500 may include simulating the set of executable actions to obtain a response corresponding to each of the one or more queries without execution. For example, for a customer query "what will happen if I withdraw INR 5,000 from the account?", the expected outcome would be a simulation of the behavior of the customer withdrawing INR 5,000 from the account and a response (i.e., simulation of the executable action in case of withdrawal of INR 5,000) provided to the customer query. In such a case, the customer will be able to decide whether withdrawing INR 5,000 would be a good idea. In other words, the customer may not want to withdraw INR 5,000 without knowing what would happen upon withdrawing the amount.

Referring now to FIGs. 6A, 6B, and 6C, an exemplary model of a set of instructions (for example, an instruction set 601) is illustrated, in accordance with some embodiments of the present disclosure. The model of the instruction set 601 may include the instruction set 601, ErrorInstruction 602, benefits 603, requirements 604, ChargeInstruction 605, BenefitAndChargeInstruction 606, instruction 607, and ProcessAndDocumentInstruction 608.

The model of the instruction set 601 at a base level may include generic instruction which has certain characteristics. While the instruction would be for a specific feature and instruction code, there are some key characteristics for the instruction. Firstly, it should be possible to execute the instructions in an ordered fashion. This is driven by a seqNumber parameter. Secondly, there should be an ability to execute an instruction for an effective date, i.e., an ability to generate future dated executable instructions. Thirdly, there should be an ability to tell nature of the instruction. This is driven by an InstructionDirectiveType parameter. In an exemplary embodiment, the InstructionDirectiveType parameter may include 6 different types of instructions based on a type of directive - mandatory instructions, discretionary instructions, on-confirmation instructions, informational definitive instructions (e.g., binding quote), informational non-definitive (e.g., non-binding indicative quote) and compute only instructions. It may be noted that other embodiments of the model of the instruction set 601 may include other types of instructions and therefore, the 6 types of instructions mentioned before are exemplary only and not limiting to the types of instructions that may be used based on directives and execution.

The mandatory instructions have to be executed so that the instruction set 601 may be considered as completely executed. The discretionary instructions are not mandatory and can be deferred based on business user approval. This can be as per the defined process. The on confirmation instructions should be executed only after getting explicit confirmation from the business account owner. The informational definitive instructions are for information purpose. However, the informational definitive instructions have a contractual obligation (e.g., a confirmed quote in case of an insurance quote). The informational non-definitive instructions are for information purpose. However, there is no contractual obligation (e.g., a preliminary quote). The compute only instructions are not to be applied on a system of record (such as, the system of record 204). They are to be used only to provide insights in terms of what would happen in case the request is executed. This mode is used by the system of record in case of inquiry mode requests or for simulation purposes. The actual system of record does not get changed as a result of compute only instructions.

In an embodiment, a product service (such as, the product service 402) may generate two types of instructions - benefits 603 and requirements 604. The benefits 603 are instructions related to the benefits and charges to be applied to a business account in case of an event, in context of features available on the business account. The requirements 604 are instructions related to processes and documents to be provided for successfully accepting a request. It may be noted that other embodiments of the model of the instruction set 601 may include other types of instructions and therefore, the types of instructions mentioned before are exemplary only and not limited to the benefits 603 and the requirements 604.

It may be noted that the requirements 604 and the benefits 603 are two types of queries on a product model. The model of the instruction set 601 may be extensible enough to create any new types of queries or inquiries. The appropriate constructs may be composed for different types of inquiries. Further, the model of the instruction set 601 may include a set of enums (such as, RequirementInstructionTypeEnum 609, BenefitInstructionTypeEnum 610, ChargeInstructionTypeEnum 611, ValueTypeEnum 612, and the like), each corresponding to an instruction type 613. For illustration purposes, the set of enums is shown to include 4 instruction types 613 in the model. However, in other embodiments, the list may not be limited to the shown set of enums. Different languages have different ways to implement restricted list of values and the language specific or design constructs (some static, some dynamic) and these techniques may be applied to implement the concept.

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

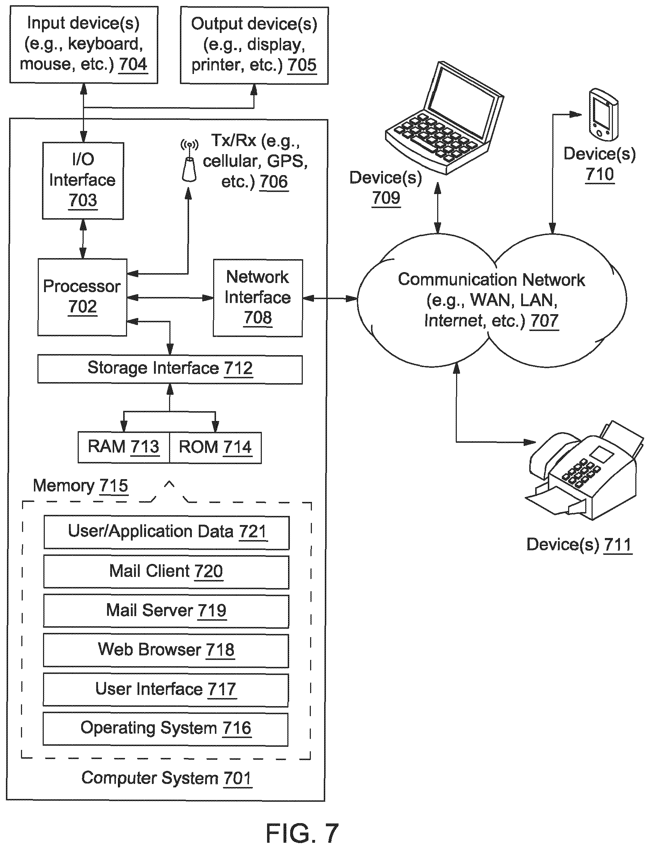

The disclosed methods and systems may be implemented on a conventional or a general-purpose computer system, such as a personal computer (PC) or server computer. Referring now to FIG. 7, a block diagram of an exemplary computer system 701 for implementing embodiments consistent with the present disclosure is illustrated. Variations of computer system 701 may be used for implementing system 100 for developing and managing a product. Computer system 701 may include a central processing unit ("CPU" or "processor") 702. Processor 702 may include at least one data processor for executing program components for executing user-generated or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD^{®} ATHLON^{®}, DURON^{®} OR OPTERON^{®}, ARM's application, embedded or secure processors, IBM^{®} POWERPC^{®}, INTEL^{®} CORE^{®} processor, ITANIUM^{®} processor, XEON^{®} processor, CELERON^{®} processor or other line of processors, etc. The processor 702 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 702 may be disposed in communication with one or more input/output (I/O) devices via I/O interface 703. The I/O interface 703 may employ communication protocols/methods such as, without limitation, audio, analog, digital, mono aural, RCA, stereo, IEEE-1394, near field communication (NFC), FireWire, Camera Link^{®}, GigE, serial bus, universal serial bus (USB), infrared, PS/2, BNC, coaxial, component, composite, digital visual interface (DVI), high-definition multimedia interface (HDMI), radio frequency (RF) antennas, S-Video, video graphics array (VGA), IEEE 802.n /b/g/n/x, Bluetooth, cellular (e.g., code-division multiple access (CDMA), high-speed packet access (HSPA+), global system for mobile communications (GSM), long-term evolution (LTE), WiMAX, or the like), etc.

Using the I/O interface 703, the computer system 701 may communicate with one or more I/O devices. For example, the input device 704 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 705 may be a printer, fax machine, video display (e.g., cathode ray tube (CRT), liquid crystal display (LCD), light-emitting diode (LED), plasma, or the like), audio speaker, etc. In some embodiments, a transceiver 706 may be disposed in connection with the processor 702. The transceiver 706 may facilitate various types of wireless transmission or reception. For example, the transceiver 706 may include an antenna operatively connected to a transceiver chip (e.g., TEXAS INSTRUMENTS^{®} WILINK WL1286^{®}, BROADCOM^{®} BCM4550IUB8^{®}, INFINEON TECHNOLOGIES^{®} X-GOLD 1436-PMB9800^{®} transceiver, or the like), providing IEEE 802.11a/b/g/n, Bluetooth, FM, global positioning system (GPS), 2G/3G HSDPA/HSUPA communications, etc.

In some embodiments, the processor 702 may be disposed in communication with a communication network 707 via a network interface 708. The network interface 708 may communicate with the communication network 707. The network interface 708 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 707 may include, without limitation, a direct interconnection, local area network (LAN), wide area network (WAN), wireless network (e.g., using Wireless Application Protocol), the Internet, etc. Using the network interface 708 and the communication network 707, the computer system 701 may communicate with devices 705, 709, 710, and 711. These devices may include, without limitation, personal computer(s), server(s), fax machines, printers, scanners, various mobile devices such as cellular telephones, smartphones (e.g., APPLE^{®} IPHONE^{®}, BLACKBERRY^{®} smartphone, ANDROID^{®} based phones, etc.), tablet computers, eBook readers (AMAZON^{®} KINDLE^{®}, NOOK^{®} etc.), laptop computers, notebooks, gaming consoles (MICROSOFT^{®} XBOX", NINTENDO" DS^{®}, SONY^{®} PLAYSTATION^{®}, etc.), or the like. In some embodiments, the computer system 701 may itself embody one or more of these devices.

In some embodiments, the processor 702 may be disposed in communication with one or more memory devices 715 (e.g., RAM 713, ROM 714, etc.) via a storage interface 712. The storage interface 712 may connect to memory devices 715 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), STD Bus, RS-232, RS-422, RS-485, I2C, SPI, Microwire, 1-Wire, IEEE 1284, Intel^{®} QuickPathInterconnect, InfiniBand, PCIe, etc. The memory drives may further include a drum, magnetic disc drive, magneto-optical drive, optical drive, redundant array of independent discs (RAID), solid-state memory devices, solid-state drives, etc.

The memory devices 715 may store a collection of program or database components, including, without limitation, an operating system 716, user interface 717, web browser 718, mail server 719, mail client 720, user/application data 721 (e.g., any data variables or data records discussed in this disclosure), etc. The operating system 716 may facilitate resource management and operation of the computer system 701. Examples of operating systems include, without limitation, APPLE^{®} MACINTOSH^{®} OS X, UNIX, Unix-like system distributions (e.g., Berkeley Software Distribution (BSD), FreeBSD, NetBSD, OpenBSD, etc.), Linux distributions (e.g., RED HAT^{®}, UBUNTU^{®}, KUBUNTU^{®}, etc.), IBM^{®} OS/2, MICROSOFT^{®} WINDOWS^{®} (XP^{®}, Vista^{®}/7/8, etc.), APPLE^{®} IOS^{®}, GOOGLE^{®} ANDROID^{®}, BLACKBERRY^{®} OS, or the like. User interface 717 may facilitate display, execution, interaction, manipulation, or operation of program components through textual or graphical facilities. For example, user interfaces may provide computer interaction interface elements on a display system operatively connected to the computer system 701, such as cursors, icons, check boxes, menus, scrollers, windows, widgets, etc. Graphical user interfaces (GUIs) may be employed, including, without limitation, APPLE^{®} MACINTOSH^{®} operating systems' AQUA^{®} platform, IBM^{®} OS/2^{®}, MICROSOFT^{®} WINDOWS^{®} (e.g., AERO^{®}, METRO^{®}, etc.), UNIX X-WINDOWS, web interface libraries (e.g., ACTIVEX^{®}, JAVA^{®}, JAVASCRIPT^{®}, AJAX^{®}, HTML, ADOBE^{®} FLASH^{®}, etc.), or the like.

In some embodiments, the computer system 701 may implement a web browser 718 stored program component. The web browser 718 may be a hypertext viewing application, such as MICROSOFT^{®} INTERNET EXPLORER^{®}, GOOGLE^{®} CHROME^{®}, MOZILLA^{®} FIREFOX^{®}, APPLE^{®} SAFARI^{®}, etc. Secure web browsing may be provided using HTTPS (secure hypertext transport protocol), secure sockets layer (SSL), Transport Layer Security (TLS), etc. Web browsers may utilize facilities such as AJAX^{®}, DHTML, ADOBE^{®} FLASH^{®}, JAVASCRIPT^{®}, JAVA^{®}, application programming interfaces (APIs), etc. In some embodiments, the computer system 701 may implement a mail server 719 stored program component. The mail server 719 may be an Internet mail server such as MICROSOFT^{®} EXCHANGE^{®}, or the like. The mail server 719 may utilize facilities such as ASP, ActiveX, ANSI C++/C#, MICROSOFT.NET^{®} CGI scripts, JAVA^{®}, JAVASCRIPT^{®}, PERL^{®}, PHP^{®}, PYTHON^{®}, WebObjects, etc. The mail server 719 may utilize communication protocols such as internet message access protocol (IMAP), messaging application programming interface (MAPI), MICROSOFT^{®} EXCHANGE^{®}, post office protocol (POP), simple mail transfer protocol (SMTP), or the like. In some embodiments, the computer system 701 may implement a mail client 720 stored program component. The mail client 720 may be a mail viewing application, such as APPLE MAIL^{®}, MICROSOFT ENTOURAGE^{®}, MICROSOFT OUTLOOK^{®}, MOZILLA THUNDERBIRD^{®}, etc.

In some embodiments, computer system 701 may store user/application data 721, such as the data, variables, records, etc. (e.g., the set of predictive models, the plurality of clusters, set of parameters (batch size, number of epochs, learning rate, momentum, etc.), accuracy scores, competitiveness scores, ranks, associated categories, rewards, threshold scores, threshold time, and so forth) as described in this disclosure. Such databases may be implemented as fault-tolerant, relational, scalable, secure databases such as ORACLE^{®} OR SYBASE^{®} OR POSTGRESQL^{®} OR any such similar data. Alternatively, such databases may be implemented using standardized data structures, such as an array, hash, linked list, struct, structured text file (e.g., XML), table, or as object-oriented databases (e.g., using OBJECTSTORE^{®}, POET^{®}, ZOPE^{®}, MONGODB^{®}, etc.). Such databases may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of developing and managing a product. The method and system enable businesses to rapidly create and launch new products. Further, the method and system enable product modeling by business users. Further, the method and system provide low code or no code environment to inject behaviors and a framework to execute the instructions in a modular and efficient manner. Further, the method and system provide an environment to run simulations on the configured product.

As will be appreciated by those skilled in the art, the techniques described in the various embodiments discussed above are not routine, or conventional, or well understood in the art. The techniques discussed above provide for developing and managing a product. The techniques provide an ability to model a new industry template using a template modeler for an industry, line of business, or business product line in a dynamic manner, define the types of features, charges, benefits, documents on the template (e.g., ULIP product, Term product, Savings account product, Health Insurance product, Residential Mortgage, etc.). The techniques further provide an ability to define a marketable product offering based on the published product template for an industry or line of business. The techniques further provide an ability to define and configure features (explicit or implicit) on the product and configure behaviors on the features. The techniques further provide an ability to configure pricing of the feature in a flexible and dynamic way by configuring the charge behavior. The techniques further provide an ability to define benefits on the feature and associate behaviors for the benefits. The techniques further provide an ability to provide a configurable instruction sets based on the event and purchased unit (customer policy, customer savings account etc.) context. The techniques further provide an ability to modify behavior and create new version of products which can co-exist with the previous version of the products and be effective as of the day the new version is launched. The techniques further provide an ability to manage optional investment portfolios and strategies on the product. The techniques further provide an ability to define custom events on the template and associate the events to the feature and product life cycle. The techniques further provide an ability to create a hierarchy of features to provide mandatory buying of the parent in case a child feature needs to be bought. The techniques further provide an ability to create variants of every feature at any level in the hierarchy. The techniques further provide an ability to create bundles, i.e., mandatory buying of a child feature if the parent is bought. The techniques further provide an ability to link a feature to another feature in either a parent-child mode or sibling mode, i.e., one can buy a child feature only if the parent feature is bought (e.g., an accidental benefit rider cannot be bought without buying the base coverage linked to it). The techniques further provide an ability to simulate behavior on the defined product configuration. The techniques further provide an ability to inject behavior for events at a feature and product level and to generate executable instruction sets. The techniques further provide an ability for downstream systems to respond to instruction sets received using the instruction processor and to execute the instructions independently.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for developing and managing a product. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for developing and managing a product, the method comprising:
creating, by a product development and management (PDM) device, a product template comprising a plurality of data elements, wherein the plurality of data elements is indicative of configurable items;
configuring, by the PDM device, one or more of the plurality of data elements in the product template to generate a product model;
configuring, by the PDM device, the product model using one or more of a plurality of rules, based on an industry specific domain knowledge, to obtain at least one product and to generate a set of instructions for the at least one product;
receiving, by the PDM device, one or more queries from a user device corresponding to the at least one product; and
processing, by the PDM device, the set of instructions in response to each of the one or more queries to create a set of executable actions, wherein each of the set of executable actions comprises a predefined execution criterion.

2. The method of claim 1, wherein the plurality of data elements comprises a plurality of features from a feature library, a plurality of configurable feature elements, a plurality of events, and a plurality of behavior types.

3. The method of claim 2, wherein configuring one or more of the plurality of data elements in the product template, comprises at least one of
selecting one or more of the plurality of features from the product template;
creating a linked arrangement of one or more of the plurality of features of the product model, wherein the linked arrangement comprises a set of primary features and a set of secondary features;
creating a variant feature corresponding to each of one or more of the plurality of features in the product model;
selecting one or more feature elements from the plurality of configurable feature elements and assigning a value to each of the selected one or more feature elements;
defining at least one product offering for the product model, wherein each of the at least one product offering corresponds to a product; and
defining one or more of the plurality of events and one or more of the plurality of behavior types for the product model.

4. The method of claim 2, wherein configuring the product model using one or more of the plurality of rules comprises:
determining a response to one or more of the plurality of behavior types in the product model in accordance with the one or more of the plurality of rules; and
determining a response to one or more of the plurality of events in the product model based on the one or more of the plurality of behavior types in accordance with the one or more of the plurality of rules.

5. The method of claim 1, further comprising executing each of the set of executable actions upon successful validation of the predefined execution criterion.

6. The method of claim 1, further comprising, upon receiving the one or more queries, simulating the set of executable actions to obtain a response corresponding to each of the one or more queries.

7. The method of claim 1, wherein the set of executable actions comprises at least one of user action-based executable actions and time-based executable actions, wherein the predefined execution criterion for each of the user action-based executable actions is receipt of a user command for execution, and wherein the predefined execution criterion for each of the time-based executable actions is expiration of a predefined time interval.

8. A system for developing and managing a product, the system comprising:
a processor; and
a memory communicatively coupled to the processor, wherein the memory stores processor instructions, which when executed by the processor, cause the processor to:
create a product template comprising a plurality of data elements, wherein the plurality of data elements is indicative of configurable items;
configure one or more of the plurality of data elements in the product template to generate a product model;
configure the product model using one or more of a plurality of rules, based on an industry specific domain knowledge, to obtain at least one product and to generate a set of instructions for the at least one product;
receive one or more queries from a user device corresponding to the at least one product; and
process the set of instructions in response to each of the one or more queries to create a set of executable actions, wherein each of the set of executable actions comprises a predefined execution criterion.

9. The system of claim 8, wherein the plurality of data elements comprises a plurality of features from a feature library, a plurality of configurable feature elements, a plurality of events, and a plurality of behavior types.

10. The system of claim 9, wherein to configure one or more of the plurality of data elements in the product template, the processor instructions, on execution, cause the processor to, at least one of:
select one or more of the plurality of features from the product template;
create a linked arrangement of one or more of the plurality of features of the product model, wherein the linked arrangement comprises a set of primary features and a set of secondary features;
create a variant feature corresponding to each of one or more of the plurality of features in the product model;
select one or more feature elements from the plurality of configurable feature elements and assigning a value to each of the selected one or more feature elements;
define at least one product offering for the product model, wherein each of the at least one product offering corresponds to a product; and
define one or more of the plurality of events and one or more of the plurality of behavior types for the product model.

11. The system of claim 9, wherein to configure the product model using one or more of the plurality of rules, the processor instructions, on execution, cause the processor to:
determine a response to one or more of the plurality of behavior types in the product model in accordance with the one or more of the plurality of rules; and
determine a response to one or more of the plurality of events in the product model based on the one or more of the plurality of behavior types in accordance with the one or more of the plurality of rules.

12. The system of claim 8, wherein the processor instructions, on execution, cause the processor to execute each of the set of executable actions upon successful validation of the predefined execution criterion.

13. The system of claim 8, wherein upon receiving the one or more queries, the processor instructions, on execution, cause the processor to, simulate the set of executable actions to obtain a response corresponding to each of the one or more queries.

14. The system of claim 8, wherein the set of executable actions comprises at least one of user action-based executable actions and time-based executable actions, wherein the predefined execution criterion for each of the user action-based executable actions is receipt of a user command for execution, and wherein the predefined execution criterion for each of the time-based executable actions is expiration of a predefined time interval.

15. A non-transitory computer-readable medium storing computer-executable instructions for developing and managing a product, the computer-executable instructions configured for:
creating a product template comprising a plurality of data elements, wherein the plurality of data elements is indicative of configurable items;
configuring one or more of the plurality of data elements in the product template to generate a product model;
configuring the product model using one or more of a plurality of rules, based on an industry specific domain knowledge, to obtain at least one product and to generate a set of instructions for the at least one product;
receiving one or more queries from a user device corresponding to the at least one product; and
processing the set of instructions in response to each of the one or more queries to create a set of executable actions, wherein each of the set of executable actions comprises a predefined execution criterion.

16. The non-transitory computer-readable medium of claim 15, wherein the plurality of data elements comprises a plurality of features from a feature library, a plurality of configurable feature elements, a plurality of events, and a plurality of behavior types.

17. The non-transitory computer-readable medium of claim 16, wherein to configure one or more of the plurality of data elements in the product template, the computer-executable instructions are configured for, at least one of:
selecting one or more of the plurality of features from the product template;
creating a linked arrangement of one or more of the plurality of features of the product model, wherein the linked arrangement comprises a set of primary features and a set of secondary features;
creating a variant feature corresponding to each of one or more of the plurality of features in the product model;
selecting one or more feature elements from the plurality of configurable feature elements and assigning a value to each of the selected one or more feature elements;
defining at least one product offering for the product model, wherein each of the at least one product offering corresponds to a product; and
defining one or more of the plurality of events and one or more of the plurality of behavior types for the product model.

18. The non-transitory computer-readable medium of claim 16, wherein to configure the product model using one or more of the plurality of rules, the computer-executable instructions are configured for:
determining a response to one or more of the plurality of behavior types in the product model in accordance with the one or more of the plurality of rules; and
determining a response to one or more of the plurality of events in the product model based on the one or more of the plurality of behavior types in accordance with the one or more of the plurality of rules.

19. The non-transitory computer-readable medium of claim 15, wherein the computer-executable instructions are configured for executing each of the set of executable actions upon successful validation of the predefined execution criterion.

20. The non-transitory computer-readable medium of claim 15, wherein, upon receiving the one or more queries, the computer-executable instructions are configured for simulating the set of executable actions to obtain a response corresponding to each of the one or more queries.
